# EUROPÄISCHE PATENTSCHRIFT

(11) **EP 2 731 245 B1**
(45) Veröffentlichungstag und Bekanntmachung des Hinweises auf die Patenterteilung: **28.03.2018**
(21) Anmeldenummer: 12191816.3
(22) Anmeldetag: 08.11.2012
(51) Int. Cl.: H04L 25/49, H02M 3/156, H02M 1/00

(54) **Elektrische Vorrichtung zur getakteten Weitergabe von elektrischer Energie**
Electrical device for the metered transfer of electrical energy
Dispositif électrique destiné à la transmission cadencée d'énergie électrique

(43) Veröffentlichungstag der Anmeldung: 14.05.2014
(73) Patentinhaber: Elmos Semiconductor Aktiengesellschaft, 44227 Dortmund (DE)
(72) Erfinder: Sudhaus, Andre, 44227 Dortmund (DE); Devilee, Petrus Johannes, 44227 Dortmund (DE)
(74) Vertreter: dompatent von Kreisler Selting Werner - Partnerschaft von Patent- und Rechtsanwälten mbB

(56) Entgegenhaltungen:
- US-A1- 2008 175 029
- US-A1- 2012 250 378

## Beschreibung

Die Erfindung betrifft schaltende elektrische Systeme wie z.B. elektrische Vorrichtungen, durch die elektrische Energie getaktet von einem Eingang an einen Ausgang weitergegeben wird.

Derartige Vorrichtungen sind z.B. als Schaltregler für Regelkreise oder z.B. für die Transformation von Gleichspannungen bekannt (siehe z. B. US-A-2008/0175029 und US-A-2012/0250378). Zur getakteten Weitergabe von elektrischer Energie dient bei schaltenden elektrischen Vorrichtungen ein Zwischenspeicher (typischerweise in Form eines Kondensators), der getaktet auf- und entladbar ist.

Die fortschreitend geforderte Miniaturisierung schaltender elektrischer Systeme zwingt zur Verwendung immer kleiner werdender Bauteile, was eine Erhöhung der Schalt- bzw. Grundfrequenz erforderlich macht, bei der das System betrieben wird. Diese Grundfrequenzen liegen damit oberhalb bestimmter Frequenzbänder, innerhalb derer das getaktete System keine elektromagnetische Strahlung abgeben darf. Dies kann z.B. durch bauliche und schaltungstechnische Maßnahmen verhindert oder zumindest den EMV-Bestimmungen entsprechend abgemildert werden, was aber in jedem Fall mit zusätzlichem Aufwand verbunden ist.

Aufgabe der Erfindung ist es, eine schaltende bzw. getaktet betriebene elektrische Vorrichtung zu schaffen, die über vereinfachte Möglichkeiten der Verhinderung/Reduzierung der in einem vorgebbaren Frequenzband abgestrahlten Leistung verfügt.

Zur Lösung dieser Aufgabe wird mit der Erfindung eine elektrische Vorrichtung zur getakteten Weitergabe von elektrischer Energie oder mit getakteter Weitergabe von elektrischer Energie vorgeschlagen, wobei die Vorrichtung versehen ist mit den Merkmalen des Anspruchs 1. Einzelne Ausgestaltungen der Erfindung sind Gegenstand der Unteransprüche.

Mit der Erfindung wird sinngemäß und zusammengefasst vorgeschlagen, bei einem elektrischen System, das mit einer recht hohen Grundfrequenz getaktet/geschaltet wird, die Subharmonischen der Grundfrequenz bei Betrieb des Systems im Teillastbereich durch eine Puls-Paket-Modulation zu kontrollieren. Durch diese Ansteuerung mittels lediglich Puls-Paketen, d.h. Ansteuerpulsgruppen und/oder Ansteuerpausen (Bursts) mit einer bestimmten Anzahl von Ansteuerpulsen kann bzw. können die resultierende Subharmonische(n), die sich im Frequenzspektrum einstellt/einstellen, beeinflusst werden, indem die Anzahl der Pulse der Puls-Pakete entsprechend gewählt wird. In gewisser Weise kann die im Teillastbetrieb erfindungsgemäß vorgesehene Puls-Paket-Modulation mit einer Pulsdichtenmodulation gleichgesetzt werden.
Als Anwendungsbeispiele für die Erfindung können Schaltregler für die unterschiedlichsten Zwecke wie z.B. zur Spannungserzeugung (DC/DC-Converter) genannt werden. Ferner seien als Anwendungsbeispiele ein Hochsetzsteller (Boost-Konverter), ein Tiefsetzsteller (Buck-Konverter), ein SEPIC- und ein Cuk-Konverter genannt.

Mit der Erfindung ist es z.B. möglich, bei einem geschalteten elektrischen System, das pulsweitenmoduliert mit einer Grundfrequenz von einigen wenigen MHz betrieben wird, die Anzahl der Pulse bei der Puls-Paket-Modulation so zu wählen, dass das System z.B. nicht im AM-Band und nicht akustisch wahrnehmbar abstrahlt. Akustisch wahrnehmbare Geräusche können dabei durch mechanische Eigenschaften infolge einer elektrischen Anregung der elektrischen Bauteile wie z.B. dem im Regelfall zur Zwischenspeicherung elektrischer Energie erforderlichen Kondensator oder der Induktivität hervorgerufen werden. Durch Vorab-Analysen, d.h. z.B. Simulationen oder empirische Untersuchungen sind die unter dem Gesichtspunkt der Vermeidung/ Unterdrückung/Dämpfung von Leistungsabstrahlung in den jeweils vorgegebenen, auszuschließenden Frequenzbändern oder Einzelfrequenzen zulässigen Zahlenbereiche für die Anzahl von Pulsen für die Puls-Paket-Modulation zu ermitteln, die für einen Teillastbetrieb der elektrischen schaltbaren Vorrichtung zulässig sind.

In vorteilhafter Weiterbildung der Erfindung kann vorgesehen sein, dass die elektrische Vorrichtung einen Speicher (aus z.B. einer Induktivität und/oder einer Kapazität) zur Zwischenspeicherung elektrischer Energie zur Transformation einer am Eingang anstehenden Eingangsgleichspannung in eine Ausgangsgleichspannung am Ausgang aufweist, wobei der Schalter zum Aufladen des Speichers und zum zwecks Weitergabe der gespeicherten elektrischen Energie an den Ausgang erfolgenden Entladen des Speichers getaktet ein- und ausschaltbar ist. Der getaktete Schalter befindet sich an der für die spezifische elektrische Schaltung jeweils vorgesehenen Position zwischen Eingang und Ausgang der elektrischen Vorrichtung und dient bei dieser Weiterbildung der Erfindung der alternierenden Aufladung sowie Entladung eines Speichers, bei dem es sich beispielsweise um einen Kondensator handelt. Weitere schaltungstechnische Komponenten, wie beispielsweise Induktivitäten und Freilaufdioden sind ebenfalls in die elektrische Schaltung integrierbar, was aber an sich bei elektrischen Schaltreglern grundsätzlich bekannt ist.

Die Hauptmerkmale der erfindungsgemäßen Vorrichtung lassen sich wie folgt zusammenfassen:
- Kontrolle über die Abstrahlung elektromagnetischer Wellen von schaltbaren Systemen wie beispielsweise Schaltreglern durch kontrollierte Puls-Paket-Modulation (beispielsweise in der Anwendung der Spannungserzeugung durch einen Schaltregler);
- Verwendung einer festen oder frequenzmodulierten Grundfrequenz z.B. zur Energieübertragung bei Schaltreglern, die z.B. eine Dimensionierung von externen Komponenten ermöglicht;
- Vermeidung von Emissionen in vorgebbaren bestimmten Frequenzbändern, beispielsweise in dem Amplituden-Modulationsband für den Rundfunk-Empfang in Kfz-Radios, unter anderem und insbesondere im Falle von nicht kontinuierlichem Schaltbetrieb;
- Vermeidung von akustischen Emissionen, beispielsweise generiert durch mechanische Eigenschaften intermittierend angesteuerter elektronischer Komponenten wie z.B. Kondensatoren;
- Verwendung einer Puls-Dichte-Funktion zur Modulation der Ausgangsleistung der elektrischen Vorrichtung, wobei diese im Weiteren, aber nicht notwendigerweise mit variabler Frequenz generiert werden kann;
- Formung einer Einhüllenden der Schaltvorgänge (Taktung) durch Anlegen von Randbedingungen wie
   - minimale Aktivierungszeiten,
   - minimale Deaktivierungszeiten und
   - maximale Zyklusdauer;
- Reduktion von Emissionsspitzen durch wahlweise und insbesondere variable Verwendung/Nutzung zumindest einer der zuvor genannten Randbedingungen.

Die Erfindung wird nachfolgend anhand eines Ausführungsbeispiels und unter Bezugnahme auf die Zeichnung näher erläutert. Im Einzelnen zeigen dabei:
- Fig. 1: beispielhaft und schematisch ein Schaltbild für ein elektrisches schaltendes System in Form eines DC/DC-Spannungskonverters für ein Fahrzeug und
- Fig. 2: schematisch das Konzept der Puls-Paket-Modulation im Teillastbetrieb im Gegensatz zur ansonsten erfolgenden Pulsweitenmodulation im Normalbetrieb des schaltenden Systems gemäß Fig. 1.

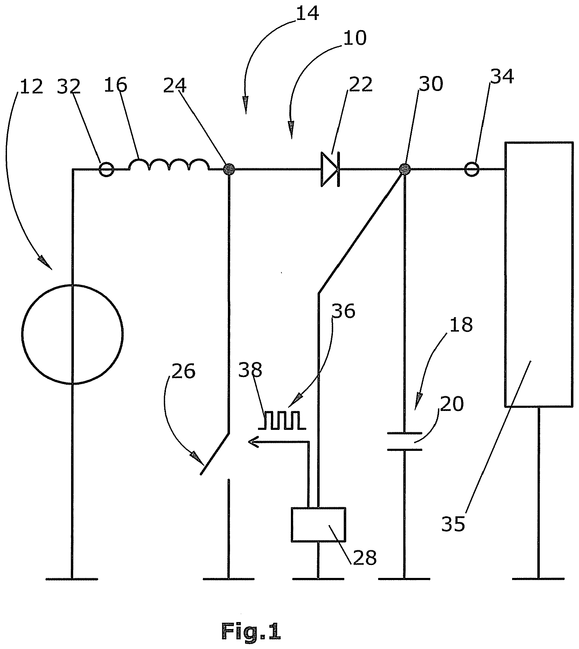

In Fig. 1 ist eine elektrische Vorrichtung 10 als Schaltung gezeigt, wobei es sich in diesem Ausführungsbeispiel um einen Gleichspannungsumformer (DC/DC-Spannungskonverter) handelt, der beispielsweise vom Bordnetz eines Fahrzeugs betrieben wird. Die Spannungsversorgung 12 wird also durch das Bordnetz geliefert, wobei die Vorrichtung 10 ein LC-Glied 14 mit einer an V-Bordnetz (V_{BN}) angeschlossenen Induktivität 16 und einer gegen Masse geschalteten Kapazität 18 in Form eines elektrische Energie speichernden Kondensators 20 umfasst. Zwischen der Induktivität 16 und der Kapazität 18 ist eine Freilaufdiode 22 geschaltet, wobei der Schaltungsknoten 24 zwischen der Freilaufdiode 22 und der Induktivität 16 mit Hilfe eines getaktet betreibbaren Schalters 26 alternierend mit Masse verbindbar ist. Der Schalter 26 wird von einem Schaltregler (allgemein einer Ansteuereinheit 28) angesteuert, der an seinem Eingang die an dem zwischen der Freilaufdiode 22 und der Kapazität 18 anstehende Ausgangsspannung (siehe den Knoten 30) empfängt. Während also am Eingang 32 der Vorrichtung 10 die Versorgungsspannung V_{BN} ansteht, liefert die Vorrichtung 10 an ihrem Ausgang 34 eine durch die Ansteuereinheit 28 geregelte Ausgangsspannung zum Betreiben eines Verbrauchers 35.

Die Ansteuereinheit 28 erzeugt ein pulsweitenmoduliertes Ansteuerungssignal in Form einer Ansteuerpulsfolge 36, die aus einer Folge von bezüglich ihrer Weite modulierbaren Pulsen 38 besteht.
Schaltungskonzepte der oben beschriebenen und in Fig. 1 gezeigten Art sind grundsätzlich bekannt.

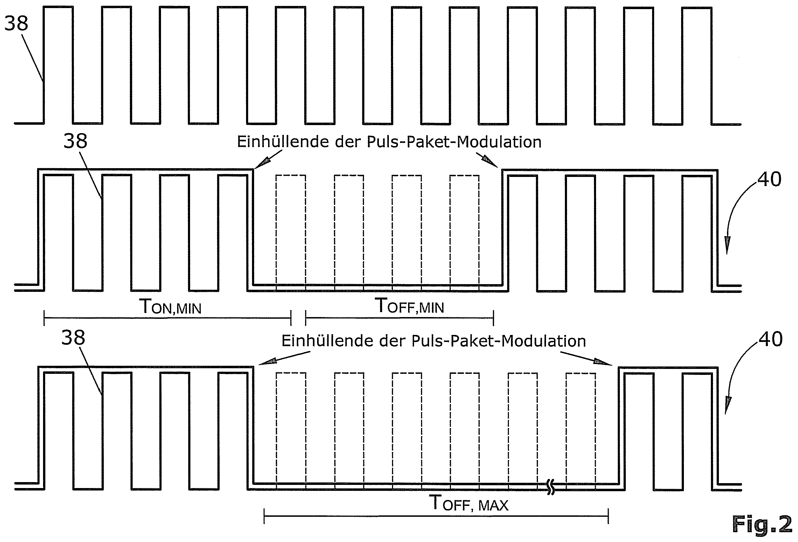

Die Besonderheit der Vorrichtung 10 ist in der Umschaltbarkeit der Ansteuerung des Schalters 26 in bestimmten Phasen des Betriebs der Vorrichtung 10, beispielsweise im Teillastbetrieb, zu sehen. Dies ist beispielsweise in Fig. 2 gezeigt. Das oberste Diagramm in Fig. 2 zeigt die ununterbrochene Ansteuerpulsfolge 36 bei Normalbetrieb in Form einer PWM (Pulsweitenmodulation).

Das mittlere und das untere Diagramm in Fig. 2 zeigen die Besonderheiten der Erfindung und der Ansteuerung im Teillastbetrieb. Hier werden Puls-Pakete vorgebbarer Länge und mit vorgebbarer Anzahl von Ansteuerpulsen ausgeblendet bzw. die Ansteuerung des Schalters 26 erfolgt lediglich noch in den verbleibenden Zeiträumen in Form von Puls-Paketen 40, in denen die Ansteuerpulse 38 an den Schalter 26 angelegt werden. Dadurch wird der Schalter 26 nicht mehr mit der durch die Pulsweitenmodulation bestimmten Grundfrequenz mit Ansteuerpulsen 38 versorgt, sondern mit einer Subharmonischen der Grundfrequenz. Durch die Wahl der minimal zulässigen Mindestaktivierungszeit (T_{ON,MIN}), der minimal zulässigen Mindestdeaktivierungszeit (T_{OFF,MIN}), der maximal zulässigen Höchstdeaktivierungszeit (T_{OFF,MAX}) und der maximal zulässigen Höchstzyklusdauer (T_{PERIOD,MAX}) lassen sich wahlweise Subfrequenzbänder und Subeinzelfrequenzen unterhalb der Grundfrequenz ausschließen, so dass der Schaltregler 28 und die gesamte Vorrichtung 10 in diesen Bereichen des Frequenzspektrums nicht bzw. reduziert abstrahlen. Beispielsweise lässt sich auf diese Art und Weise bei einer Grundfrequenz, die im MHz-Bereich liegt, das Emissionsspektrum im AM-Bereich ausschließen. Ebenso kann man den akustisch noch wahrnehmbaren Frequenzbereich ausschließen.

Mit anderen Worten ist es also nach der Erfindung möglich, bezüglich der Anzahl der Ansteuerpulse 38 pro Puls-Paket 40 die Mindestanzahl und die Höchstanzahl von Ansteuerpulsen 38 zu bestimmen bzw. umgekehrt pro ausgeblendetem Puls-Paket diese Grenzwerte zu definieren.

Mit dem erfindungsgemäßen Konzept ist es also möglich, hochfrequent bzw. höchstfrequent getaktete elektrische Systeme derart zu modulieren, dass in vorgebbaren Subharmonischen-Frequenzbändern keine oder reduzierte elektromagnetische oder akustische Emission von dem System ausgeht, wobei dieses Konzept ohne aufwändige konstruktive/schaltungstechnische EMV-Maßnahmen realisiert werden kann.

### BEZUGSZEICHENLISTE

- 10: Vorrichtung
- 12: Spannungsversorgung
- 14: LC-Glied
- 16: Induktivität
- 18: Kapazität
- 20: Kondensator
- 22: Freilaufdiode
- 24: Schaltungsknoten
- 26: Schalter
- 28: Ansteuereinheit (Schaltregler)
- 30: Schaltungsknoten
- 32: Eingang
- 34: Ausgang
- 35: Verbraucher
- 36: Ansteuerpulsfolge (Ansteuerungssignal)
- 38: Ansteuerpulse
- 40: Puls-Paket

## Patentansprüche

1. Elektrische Vorrichtung zur getakteten Weitergabe von elektrischer Energie oder mit getakteter Weitergabe von elektrischer Energie, mit
- einem Eingang (32) sowie einem Ausgang (34),
- einem zwischen dem Eingang (32) und dem Ausgang (34) geschalteten, getakteten Schalter (26) und
- einer Ansteuereinheit (28) zur Taktung des Schalters (26) durch eine Pulsweiten- oder Pulsdichtemodulation mit einer Grundfrequenz, mit der Ansteuerpulse (38) aufeinanderfolgen,
**dadurch gekennzeichnet ,**
- **dass** die Pulsweitenmodulation durch periodische Taktung während jeweils lediglich einer Ansteuerpulsgruppe bestehend aus einer variablen, vorgebbaren Anzahl von aufeinanderfolgenden Ansteuerpulsen (38) oder Ansteuerpausen und damit bei einer Subharmonischen der Grundfrequenz betreibbar ist und
- **dass** die minimal zulässige Mindestanzahl und die maximal zulässige Höchstanzahl der Ansteuerpulse (38) oder -pausen der Ansteuerpulsgruppe zum Ausschluss oder zur Reduktion von Subharmonischen, die innerhalb vorgebbarer, unterhalb der Grundfrequenz liegender Subfrequenzbänder liegen, gewählt sind.

2. Elektrische Vorrichtung nach Anspruch 1, **gekennzeichnet durch** einen Speicher (16,18,20) zur Zwischenspeicherung elektrischer Energie zur Transformation einer am Eingang (32) anstehenden Eingangsgleichspannung in eine Ausgangsgleichspannung am Ausgang (34), wobei der Schalter (26) zum Aufladen des Speichers (16,18,20) und zum zwecks Weitergabe der gespeicherten elektrischen Energie an den Ausgang (34) erfolgenden Entladen des Speichers (18,20) getaktet ein- und ausschaltbar ist.

3. Elektrische Vorrichtung nach Anspruch 2, **gekennzeichnet durch** eine Reihenschaltung aus einer Induktivität (16), einer Kapazität (18) mit einer zwischen diesen geschalteten Freilaufdiode (22), wobei der Schalter (26) parallel zur Serienschaltung aus Freilaufdiode (22) und Kapazität (18,20) liegt.

4. Elektrische Vorrichtung nach Anspruch 2, **gekennzeichnet durch** eine Reihenschaltung aus einer Induktivität (16), einer Kapazität (18,20) und einer Freilaufdiode (22).

## Claims

1. An electrical apparatus for transmitting electrical energy in a clocked manner or with clocked transmission of electrical energy, comprising
- an input (32) and an output (34),
- a clocked switch (26) connected between the input (32) and the output (34), and
- a drive unit (28) for clocking the switch (26) by pulse width modulation or pulse density modulation with a fundamental frequency at which drive pulses (38) follow one another,
**characterized in**
- **that** the pulse width modulation can be operated by periodic clocking during in each case only one drive pulse group comprising a variable, predefinable number of successive drive pulses (38) or drive intervals and therefore at a subharmonic of the fundamental frequency, and
- **that** the minimum permissible minimum number and the maximum permissible maximum number of drive pulses (38) or drive intervals in the drive pulse group are selected to the exclusion or with reduction of subharmonics which lie within predefinable subfrequency bands which are below the fundamental frequency.

2. The electrical apparatus according to claim 1, **characterized by** a store (16,18,20) for temporary storage of electrical energy for transformation of an input direct voltage applied at the input terminal (32) into an output direct voltage at the output terminal (34), the switch (26) being adapted to be switched on and off in a clocked manner for loading the store (16,18,20) and for unloading the store (16,18,20) for the purpose of transmitting the stored electrical energy to the output (34).

3. The electrical apparatus according to claim 2, **characterized by** a serial circuit comprising an inductance (16), a capacitance (18) and a freewheeling electrode (22) connected therebetween, the switch (26) being arranged parallel to the serial circuit comprising the freewheeling electrode (22) and the capacitance (18,20).

4. The electrical apparatus according to claim 2, **characterized by** a serial circuit comprising an inductance (16), a capacitance (18,20) and a freewheeling electrode (22).

## Revendications

1. Dispositif électrique destiné à la transmission cadencée d'énergie électrique ou qui comporte une transmission cadencée d'énergie électrique, avec
- une entrée (32) ainsi qu'avec une sortie (34),
- un commutateur (26) cadencé qui est monté entre l'entrée (32) et la sortie (34), et
- une unité de commande (28) destinée au cadencement du commutateur (26) par une modulation de largeur d'impulsion ou de densité d'impulsion avec une fréquence fondamentale à laquelle se succèdent des impulsions de commande (38),
**caractérisé en ce que**
- la modulation de largeur d'impulsion peut être mise en oeuvre par un cadencement périodique pendant respectivement seulement un groupe d'impulsions de commande composé d'un nombre variable, pouvant être spécifié au préalable, d'impulsions de commande (38) ou pauses de commande successives et donc en présence d'un harmonique inférieur de la fréquence fondamentale, et
- le nombre minimal admissible au minimum et le nombre maximal admissible au maximum d'impulsions de commande (38) ou de pauses de commande du groupe d'impulsions de commande sont choisis pour l'exclusion ou pour la réduction d'harmoniques inférieurs qui se situent à l'intérieur de bandes de fréquences inférieures qui peuvent être spécifiées au préalable et qui sont au-dessous de la fréquence fondamentale.

2. Dispositif électrique selon la revendication 1, **caractérisé par** un accumulateur (16, 18, 20) destiné au stockage intermédiaire d'énergie électrique pour la transformation d'une tension continue d'entrée présente à l'entrée (32) en une tension continue de sortie à la sortie (34), le commutateur (26) pouvant être mis en et hors circuit de façon cadencée pour le chargement de l'accumulateur (16, 18, 20) et pour le déchargement de l'accumulateur (16, 18, 20) intervenant en vue de la transmission de l'énergie électrique stockée à la sortie (34) .

3. Dispositif électrique selon la revendication 2, **caractérisé par** un circuit série composé d'une inductance (16), d'une capacitance (18) avec une diode de roue libre (22) montée entre celles-ci, le commutateur (26) étant parallèle au circuit série composé de la diode de roue libre (22) et de la capacitance (18, 20).

4. Dispositif électrique selon la revendication 2, **caractérisé par** un circuit en série constitué d'une inductance (16), d'une capacitance (18, 20) et d'une diode de roue libre (22).
